# EUROPEAN PATENT APPLICATION

(11) **EP 1 972 964 A1**
(43) Date of publication of application: **24.09.2008**
(21) Application number: 08102847.4
(22) Date of filing: 21.03.2008
(51) Int. Cl.: G01V 3/15, G01V 3/17, G01V 3/165

(54) **Portable mine detection system**

(30) Priority: 23.03.2007 TR 200701896
(71) Applicant: TUBITAK-Turkiye Bilimsel ve Teknolojik ve Arastima Kurumu, Ataturk Bulvari No. 221 06100 Kavaklidere Ankara (TR)
(72) Inventor: Sezgin, Mehmet, 41470 Gebze/Kocaeli (TR); Bahadirlar, Yildirim, 41470 Gebze/Kocaeli (TR); Turk, Ahmet Serdar, 41470 Gebze/Kocaeli (TR); Samedov, Sohrap, 41470 Gebze/Kocaeli (TR); Tasdelen, Isa, 41470 Gebze/Kocaeli (TR); Kaplan, Gulay, 41470 Gebze/Kocaeli (TR); Cayir, Mustafa, 41470 Gebze/Kocaeli (TR); Pelitci, Nedret, 41470 Gebze/Kocaeli (TR); Baykan, Orhan, 41470 Gebze/Kocaeli (TR); Kurt, Engin, 41470 Gebze/Kocaeli (TR)

(57) **Abstract**

Portable Mine Detection System, developed for the detection of landmines, is a system consisting of electromagnetic induction sensor, ground penetrating radar and flexible air suction channel for the vapour sensor. The system includes two main parts which are back unit and hand unit and it is controlled with the help of push-buttons and LCD screen. The system has two different modes called detection and identification. While an alarm is automatically generated for the presence of buried object in the former mode, the type of the detected object is predicted by using artificial intelligence based identification methods in the latter one. The user is informed with audible and visual warnings when processed sensor signals are presented to the user via LCD screen.

## Description

### Technical Field

Being a currently ongoing research subject for military and humanitarian purposes, detection of the buried land mines and deactivation of them just ready to explode, whose total number is over 100 millions, has much importance. Although it is easy to bury these fatal weapons, developing the counter measure of them whose detection and deactivation is quite dangerous and hard is still hot topic.

### Background Art

The system disclosed in PCT Patent WO 98/08115 (Wolny) which ground penetrating radar and electromagnetic induction detector are operated together and having circular cross-sectioned search head uses a radiometer which is useful only for operations where unobstructed sky illumination is present. In this system, to reduce the false alarm rate the sensor outputs are used in consideration with the predetermined laws which are set through the examination of physical properties of scanned region. Although it is important that the buried object detected is identified as mine or other, PCT Patent WO 98/08115 has no suggestion for the solution of identification. The only way for identification of the buried object is to reach the object by digging the ground painstakingly. However, this is a time consuming process and also causes the reliability of the system to reduce. Since the system has a circular search head, scanning the regions having recesses is difficult.

### Disclosure of Invention

### Technical Problem

Use of much different kind of sensors in the detection of landmines has been taking into consideration with the developments in the sensor technology. Recently, electromagnetic induction detector has the most common usage in mine detection. However; an electromagnetic induction detector has very high false alarm rate because it generates alarm for all metal pieces under the ground. Every false alarm generated causes the user both time consumption and disregardful behaviors leading to deaths by ignoring the alarms. In this context, it is emphasized that electromagnetic induction detector should be used together with ground penetrating radar to decrease the false alarm rate and increase reliability.

### Technical Solution

An electromagnetic induction detector consists of receiver and transmitter coils and electronic units. Eddy currents, in buried metal objects, produced by the magnetic field due to instantaneous high current passed through transmitter coil causes a change of magnetic field in the receiver coil. Information about metal content about buried object is obtained by processing this change in magnetic field with the help of the electronic units in electromagnetic induction detector.

Pulses are sent by ground penetrating radar transmitter antenna with certain pulse repetition frequency, and then signals reflected from the objects are obtained by means of receiver antenna and converted to digital signal. Finally, reflection information about buried objects is obtained.

### Advantageous Effects

Portable Mine Detection System explained in this invention consists of an electromagnetic induction detector developed for detection and identification of landmines including metal and ground penetrating radar sensors developed for detection and identification of landmines including plastic mines. A landmine vapour detector can also be integrated to the system optionally. Electromagnetic induction detector coil and ground penetrating radar antennas has been combined physically to scan the same position. In addition to this, the signals taken from both of the sensors have been fused for the detection and identification of landmines. Portable Mine Detection System has been designed to operate compatible with the landmine vapour detector. Vapour of landmine chemical which will be able to evaporate by means of landmine vapour sensor system installed in portable mine detection system is processed and absorbed with the help of integrated air suction search head and pomp, and then presence/absence information belonging to the landmines is obtained.

Another advantage of Portable Mine Detection System over the other landmine detection systems is graphical presentation of information about ground penetrating radar reflection energy obtained from buried object, presence/absence of metal and metal intensity. User can perceive the effect on sensors created by the buried object not only as sound but also as display. Due to the experience gained throughout time, user will be able to obtain important information from processed sensors displays generated on the screen for subjective evaluation.

Portable Mine Detection System has two main modes called as detection and identification. These modes can be chosen by activating the alternatives on related screen by means of the push-buttons existing on the handle of the hand unit. In detection mode, effects that the buried object produce on the electromagnetic induction detector and signals sent by ground penetrating radar is shown to the user by separating LCD screen vertically into three parts. Reflection of electromagnetic wave sent by ground penetrating radar is shown to the user as purified from background information in the left part of screen. Ground penetrating radar energy reflecting from the objects buried under the ground is presented in the middle part of screen. And finally, information about presence/absence of metal and metal intensity that can be acquired by evaluating the change in magnetic field which electromagnetic induction detector generates due to buried object.

When detection algorithm detects a buried object, the user is informed about this case on LCD screen as written by generating automatic detection warning. Also, detection warning on the screen attracts the attention of user by blinking. Moreover, user is also warned with sound alert.

Identification mode is run with the help of push-buttons in case that a detection warning is obtained during detection scanning. In this mode, a new scanning is done by centring the position where detection alert is obtained. Screen of identification mode is separated into three vertical regions like that of detection mode. Reflection of electromagnetic wave sent from ground penetrating radar is shown to the user as purified from background information in left region. Frequency spectrum of ground penetrating radar is presented in the middle region. Information about presence/absence of buried metal and metal intensity has been given in the right region.

Artificial intelligence based identification algorithm identifies the object detected as "Anti-Personnel Mine", "Anti-Tank Mine" and "Other". User is notified with identification foresight as written on LCD screen and identification warning on the screen attracts the attention of user by blinking.

Interaction of the user with the Portable Mine Detection System which is in the form of choosing the processes seen on the screen can be done by using three push-buttons on the handle of hand unit. User can activate some operations with the help of push-buttons and materialize some processes by choosing actions seen on the screen. User is offered some screens that provide him adjusting the ground penetrating radar detection threshold value in addition to electromagnetic induction detector sensitivity.

### Brief Description of Drawings

Figure 1- The view of hand unit (scanning arm + interaction unit)

Figure 2- The view of interaction unit

Figure 3- The view of scanning arm-handle joint.

Figure 4- The detailed view of search head.

Figure 5- The view of ground penetrating radar antenna plate

Figure 6- The view of search head case.

Figure 7- The view of back unit.

Figure 8- The block diagram of Portable Mine Detection System.

Figure 9- The flow chart of Portable Mine Detection System processing.

(100) USER INTERFACE UNIT

(101) LCD Screen

(102) Push-Buttons

(103) Headphone/Speaker

(104) LCD driver unit

(105) Spherical joint for adjustable screen view position

(106) Sun light visor

(200) TELESCOPIC SCANNING ARM

(201) Handle

(202) Arm support

(203) Tightener

(204) Gap

(205) Weight reducing string joint

(206) Joint

(207) Handle structure

(300) SEARCH HEAD

(301) Electromagnetic Induction transmitter coils

(302) Electromagnetic Induction receiver coils

(303) Ground Penetrating Radar transmitter antenna

(304) Ground Penetrating Radar receiver antenna

(305) Partitioned plate of 3D modified Vivaldi antenna

(306) Flexible air suction channel

(400) BACK UNIT

(401) Processing unit

(402) Controller unit

(403) Pulse generator unit

(404) Analogue-Digital Converter-ADC

(405) Sample/Hold unit- S/H

(406) Electromagnetic Induction electronic unit

(407) Electromagnetic Induction sensitivity adjustment unit

(408) Microcontroller unit

(409) Battery unit

(410) Power supply unit

(411) Battery charge level control and sound generator unit

### Mode(s) for Carrying Out the Invention

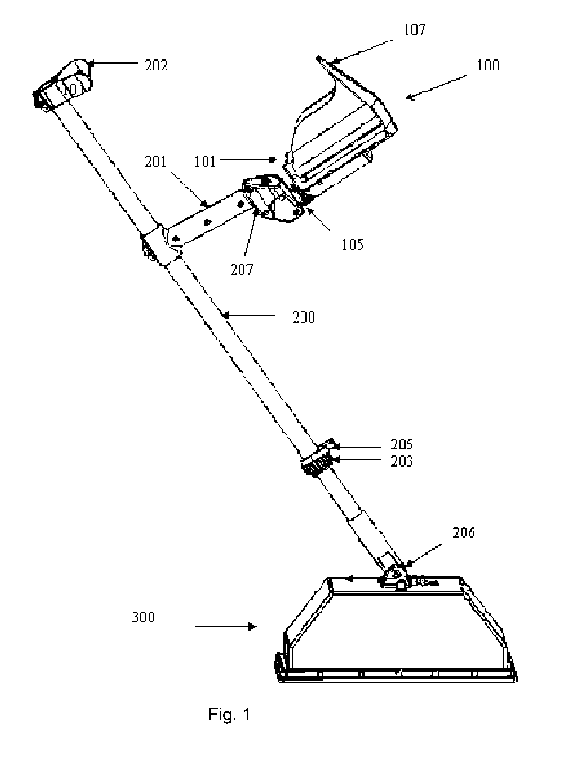

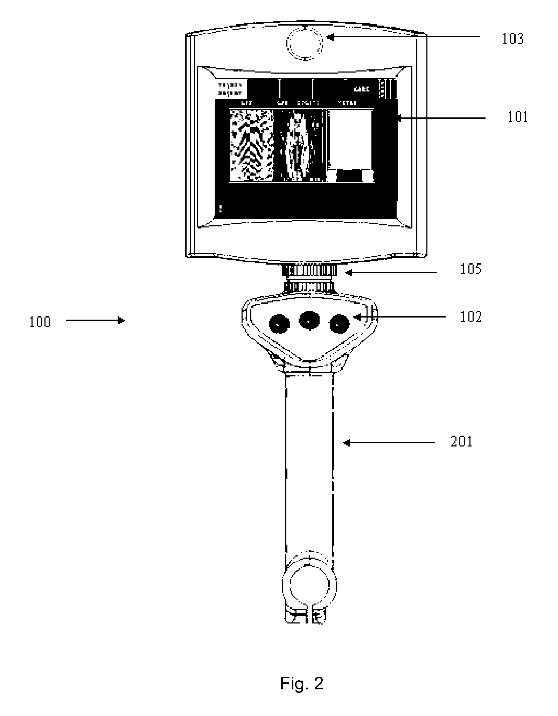

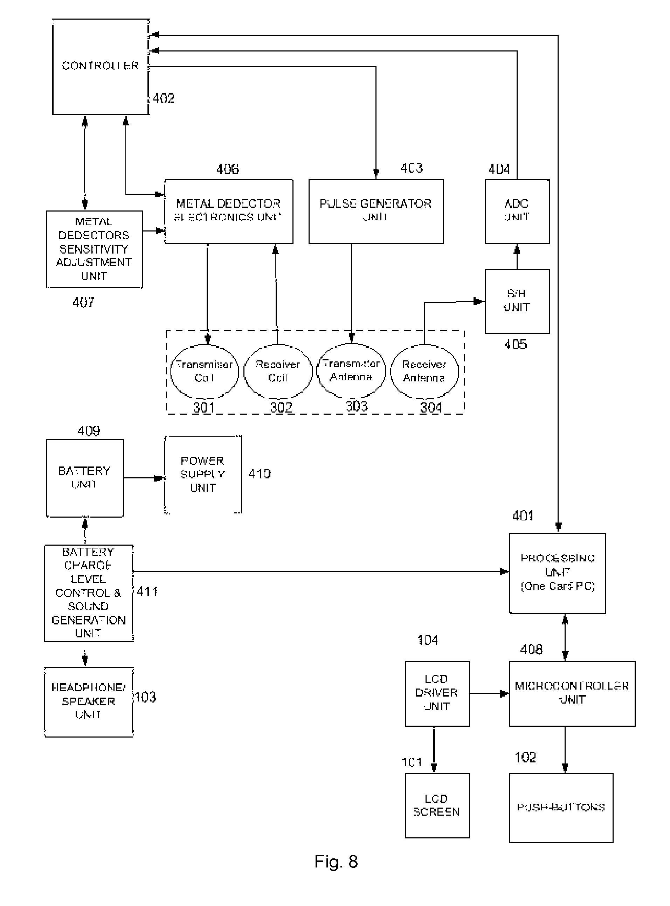

Portable Mine Detection System physically consists of hand and back unit. Figure 1 shows the components of the hand unit. The hand unit is composed of user interface unit (100), telescopic scanning arm (200) and search head (300) which is connected to the scanning arm. Figure 2 represents the user interface unit (100) components: LCD screen (101), push-buttons (102) providing the selection of functions shown on the LCD screen (101), and headphone/speaker (103) to deliver the audible alarm signals to the user. LCD driver unit (104) (Figure 8) generates the signals for LCD to be able to work. The LCD screen and the handle is connected by spherical joint so that view angle is adjustable. In this way, users can have the opportunity of adjustment for their proper view angle of the LCD screen. The LCD screen has the sun light visor (106), which can be used whenever it is necessary, so that sun light visor prevents decreasing of screen view quality in extremely sunny days due to sunlight reflecting from the screen. The parts of the user interface unit are shown in Figure 1 and Figure 2.

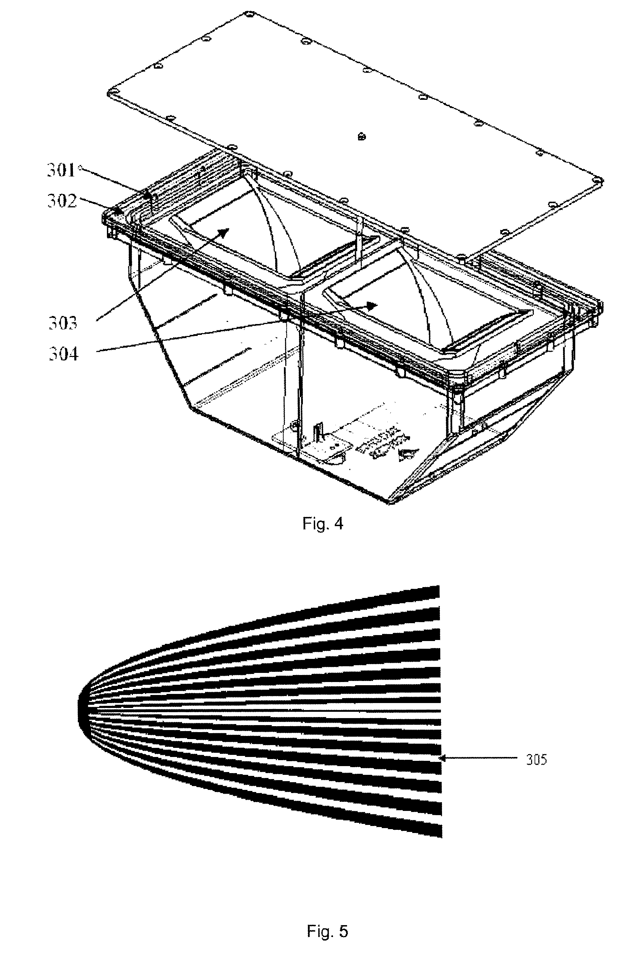

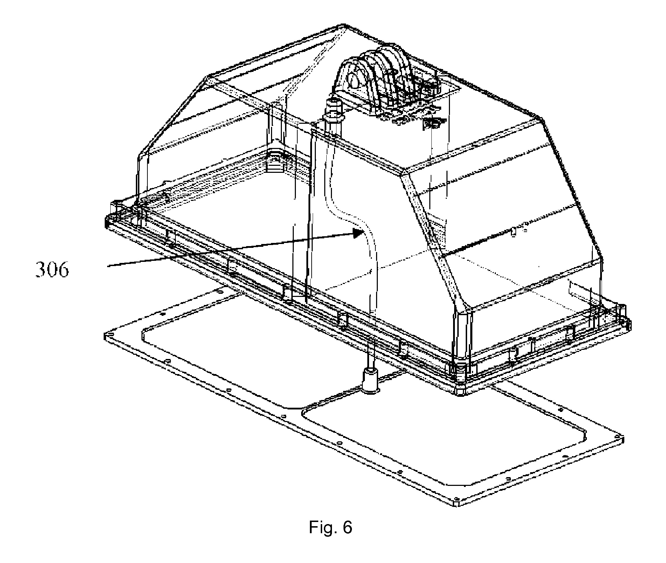

Handle on the scanning arm together with the arm support (202) at the end of scanning arm provides an easier carriage by functioning as a lever arm. Dirseklik (202) forms a prop by wrapping the arm of user during carrying scanning arm. Scanning arm is in a telescopic structure composed of two parts. The user can adjust the length of scanning arm with the help of tightener on it and this case enables him to scan comfortably. The cables transmitting electrical signals from the search head to the sensory electronic units in the back unit pass through the scanning arm. In this way, the cables are provided with protections both from exterior effects and generating clutter. There is a gap (204) where upper part of scanning arm and the handle connection intersect as shown in Figure 13 so that the cables passing through scanning arm can be tied to user interaction unit and necessary adjustments can be made to change the length of arm support (204). Moreover, weight reduction string between scanning arm and back hangers is used for decreasing weight felt in the arm of user. Weight reduction string joint (205) is just on the tightener. Connection between scanning arm and search head is made with an joint (206) so that search head can be adjusted easily in such a way that it is provided with being parallel to the ground with respect to the region scanned. Considering that user can operate under quite heavy conditions, the handle has a bossed structure, where the forefinger will contact, preventing the hand unit for slipping out of the hand (207). The parts of the hand unit are shown in Figure 1-2-3-4-5 and the view of ground penetrating radar antenna plate is shown in Figure 6.

There are transmitter (301) and receiver (302) coils of electromagnetic induction detector and transmitter (303) and receiver (304) antennas of ground penetrating radar in search head (300) which can be moved by means of scanning arm (200). Since it is intended that the coils of electromagnetic induction detector prevent blocking the radar antennas' radiation and detection sensitivity of the electromagnetic induction detector is provided to be equally distributed in a much more large area, transmitter and receiver coils of electromagnetic induction detector are positioned rectangularly in such a way that they enclose ground penetrating radar antennas.

It is desired that transmitter and receiver antennas of ground penetrating radar in search head does not generate detection warning in electromagnetic induction detector. Fort his purpose, high gain antennas to receive the signals reflected from deeply burried objects without alarming the electromagnetic induction detector are required. This is satisfied through 3D modified Vivaldi antennas. As a result, with the ground penetrating radar deeply burried objects are also detected without reducing the electromagnetic induction detector performance.

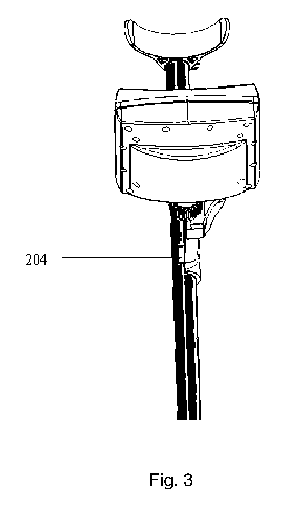

Elastic air sucktion channel (306) sending vapour of explosive to the electronic unit is installed onto the search head in case that Portable Mine Detection System should be used together with Mine Vapour Sensor. Details related with search head units are shown in Figure 3-4-5-6.

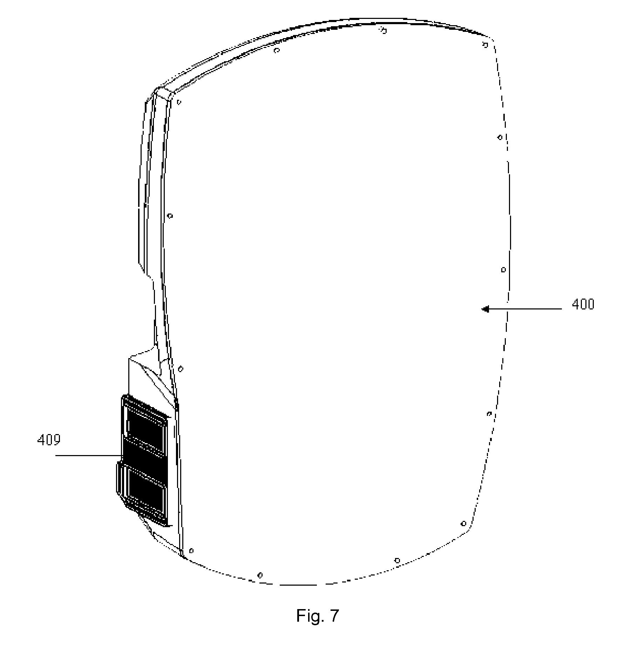

Being given the outer view of back units containing electronic units in Figure 7, the battery block supplying power to the system (409) is plug-in & plug-out with a slide structured style while not violating water-proof property.

Block diagram of Portable Mine Detection System is shown in Figure 8. There are processor unit in back unit (401), controller unit (402), pulse generator unit (403), Analog-Digital Converter-ADC (404), Sample/Hold unit- S/H (405), electronic unit of the electromagnetic induction detector (406), electromagnetic induction detector sensivity adjusment unit (407), microcontroller unit (408), battery unit (409), power supply unit (410), battery charge level control and sound generation unit (411) in back unit. Processor unit (401) consists of electromagnetic induction detector and single card PC wich performs processing of signals that come from ground penetrating radar, integrating of processed signals and presenting of detection/identification results to the user in a audible and and visual form. Controller unit (402) provides ground penetrating radar and electromagnetic induction detector operating simultaneously. Sample/Hold unit (405) obtains analog signals coming from the receiver antenna of the radar and supplies transmitting of them to Analog-Digital Converter (404). Transforming into digital format, Analog-Digital Converter transmits these signals to Controller unit (402). Controller unit (402) transmits these signals to processor unit (401) to be processed. Signals coming from the receiver coil of electromagnetic induction detector is processed by electronic unit of electromagnetic induction detector (406) and then transmitted to controller unit. Controller unit (402) transmits these signals to processor unit (401) to be processed. The user can change the sensitivity of electromagnetic induction detector by means of push-button. Electromagnetic induction detector sensivity adjusment unit (407) provides desired sensitivity by generating digital voltage that enables change in sensitivity of electronic unit of electromagnetic induction detector with respect to the entered sensitivity value. Microcontroller unit (408) provides the values entered by means of push-buttons being usable by the related units. Entire power requirement of Portable Mine Detection System is supplied with battery unit (409). Slide structured style is used in installation of battery unit into the back unit so that the user can easily change battery unit bu using only one hand. Power suppy unit (410) is used for obtaining the necessary voltage level of each circuit. Battery charge level control and sound generation unit (411) provides the user with a warning on LCD screen by measuring the battery charge level in case that battery charge level is under a definite level. In additon to this, that unit generates all audible warnings which can be delivered to the user by means of headphone/loudspeaker (103).

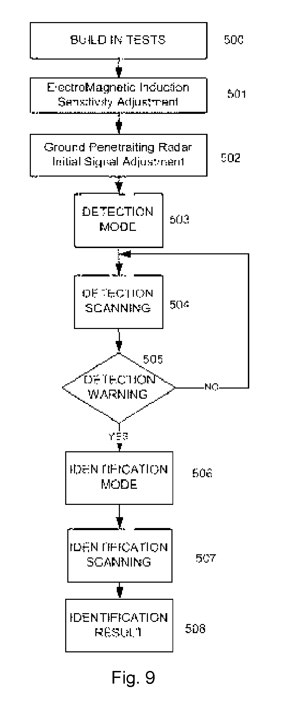

Work flow diagram of Portable Mine Detection System is shown in Figure 9. The system tests itself (500) when it is powered on and test results are noticed to the user via LCD screen. The user should adjust electromagnetic induction detector sensitivity level (501) by using push-buttons and initial signal level (502) of ground penetrating radar before starting. And then choosing identification mode (503) the user starts scanning. The system is passed to the identification mode (506) in case of detection warning (505) during identification (504). Identification scanning is performed carefully for providing that the detection position stays always in the middle of the scanning line. The user evaluates the reflection energy of ground penetrating radar display removed from background, frequency spectrum of the reflection energy, presence/absence of metal and metal intensity information and identification decision (508), that system produces, all of which are on the LCD screen at the end of identification scanning. And finally, the user gives him last decision about buried object.

## Claims

1. A portable mine detection system including ground penetrating radar and electromagnetic induction sensors detects metallic or non-metallic landmines and produces audio visual alarm comprising: user interface unit (100); telescopic scanning arm (200); air channel transmitting the explosive vapour to the electronic units of vapour sensor(306); angular shaped integrated search head (300); and back unit (400).

2. The mine detection system according to claim 1, wherein USER INTERFACE UNIT (100) comprising: LCD screen (101), push-buttons (102), headphones/speaker (103), LCD driver unit (104), spherical joint for adaptable screen view (105) and sun light visor (106), TELESCOPIC SCANNING ARM (200) comprising: handle (201), arm support (202), tightener (203), slot (204), weight reduction string joint (205), joint (206), handle (207) having the structure which prevent the device from slipping out of the hand and angular shaped INTEGRATED SEARCH HEAD (300) comprising: electromagnetic induction transmitter coils (301), electromagnetic induction receiver coils (302), ground penetrating radar transmitter antenna (303), ground penetrating radar receiver antenna (304), partitioned plate of 3D modified vivaldi antennas (305), flexible air suction channel (306) and BACK UNIT (400) comprising: processing unit (401), controller unit (402), pulse generator unit (403), analogue- digital converter-ADC (404), sample/hold unit- S/H (405), electromagnetic induction electronic unit (406), electromagnetic induction sensitivity adjustment unit (407), microcontroller unit (408), battery unit (409), power supply unit (410), battery charge level control and sound generation unit (411).

3. The mine detection system according to claim 1, wherein handle (207) has the structure which prevent the device from slipping out of the hand.

4. The mine detection system according to claim 1, wherein the sensitivity value of electromagnetic induction detector can be adjusted numerically (without potentiometer) using push-buttons (102) and user menu on the LCD screen (101).

5. The mine detection system according to claim 1, wherein the reflection of electromagnetic wave sent by ground penetrating radar removed from background information is shown on the LCD screen (101)

6. The mine detection system according to claim 1, wherein the ground penetrating radar energy reflected from buried objects is shown on the LCD screen (101).

7. The mine detection system according to claim 1, wherein the metal intensity information of the buried objects is graphically shown on the LCD screen (101).

8. The mine detection system according to claim 1, wherein the information both from ground penetrating radar and electromagnetic induction sensor are fused in both detection and identification processes.

9. The mine detection system according to claim 1, wherein the frequency spectrum of ground penetrating radar signal reflected from the buried objects is shown on the LCD screen (101).

10. The mine detection system according to claim 1, wherein the identification results of the buried object is presented as written on the LCD screen (101).

11. The mine detection system according to claim 1, wherein the result of the artificial intelligence based identification process of the detected buried object is shown on the LCD screen (101) as "Anti Personal Mine", "Anti Tank Mine" or "Other".

12. A portable mine detection system, having a detector for detecting metallic and non-metallic land mines and having a ground penetrating radar system wherein the flexible air suction channel transfers the air existing in the scanned region to the electronic units of the vapour sensor in case that the system is connected to the vapour sensor.
